# FASCICULE DE BREVET EUROPEEN

(11) **EP 4 604 488 B1**
(45) Date de publication et mention de la délivrance du brevet: **13.05.2026**
(21) Numéro de dépôt: 25188594.3
(22) Date de dépôt: 03.03.2017
(51) Int. Cl.: H04W 48/18, H04L 65/1016, H04L 65/1033

(54) **SÉLECTION D'UNE INSTANCIATION DE TRANCHE DE RÉSEAU POUR LA TRANSMISSION DE PAQUETS MONTANTS**
AUSWAHL EINER NETZWERK-SLICE-INSTANZIIERUNG ZUR ÜBERTRAGUNG VON UPLINK-PAKETEN
SELECTING A NETWORK SLICE INSTANTIATION FOR UPLINK PACKET TRANSMISSION

(30) Priorité: 07.03.2016 FR 1651892
(43) Date de publication de la demande: 20.08.2025
(62) Demande divisionnaire de: 20170020.0
(73) Titulaire: Orange, 92130 Issy-les-Moulineaux (FR)
(72) Inventeur: MOUQUET, Antoine, 92326 Chatillon (FR); MOUAFIK, Ali Amine, 92326 Chatillon (FR)

(56) Documents cités:
- FR-A1- 3 008 843
- "Lecture Notes of the Institute for Computer Sciences, Social Informatics and Telecommunications Engineering", vol. 92, 31 December 2012, SPRINGER, DE, ISBN: 978-3-642-17758-3, ISSN: 1867-8211, article VENMANI DANIEL PHILIP, YVON GOURHANT, DJAMAL ZEGHLACHE: "OpenFlow as an Architecture for e-Node B Virtualization", pages: 49 - 63, XP055316315, DOI: 10.1007/978-3-642-29093-0_5
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.2.0, 10 February 2016 (2016-02-10), pages 1 - 17, XP051087747
- "3 rd Generation Partnership Project; Technical Specification Group Services and System Aspects; Feasibility Study on New Services and Markets Technology Enablers; Stage 1 (Release 14)", 8 February 2016 (2016-02-08), XP051071720, Retrieved from the Internet <URL:http://www.3gpp.org/ftp/tsg_sa/WG1_Serv/TSGS1_73_Okinawa/docs/> [retrieved on 20160208]

## Description

La présente invention concerne le domaine des réseaux de télécommunications, et plus particulièrement celui des réseaux de télécommunication mobiles.

L'architecture de ces réseaux de télécommunications mobiles a jusqu'ici été standardisée via un groupe de standardisation connu sous le nom de 3GPP. C'est en particulier le cas des réseaux mobiles dits « 2G », « 3G » et « 4G », dont les différentes architectures sont définies dans des spécifications techniques établies par un tel organisme.

Jusqu'à la génération « 4G » de réseau mobile actuellement en cours de déploiement, les différentes architectures de réseau reposent sur des équipements bien spécifiques et dédiés à certaines fonctionnalités précises, que ce soit au niveau du réseau d'accès ou du cœur de réseau, notamment en ce qui concerne la transmission de paquets depuis ou à destination d'un terminal mobile.

Le manque de flexibilité et d'évolutivité inhérent à ce type d'architecture conventionnelle a amené à envisager l'adoption d'architectures plus flexibles pour la prochaine génération de réseaux mobile, dite « 5G », afin de pouvoir répondre rapidement à des demandes extrêmement diverses en termes de trafic ou de qualité de service.

Parmi les solutions envisagées, une des solutions les plus prometteuses repose sur une technique de découpage par tranches du réseau (« network slicing » en anglais), évoquée notamment dans le rapport technique 3GPP TR 23.799 v0.2.0 de février 2016.

Une telle technique de découpage par tranches du réseau permet à l'opérateur d'un réseau de télécommunications de créer des réseaux « sur mesure », capables de fournir des solutions optimisées pour des scénarios très variés avec des contraintes très diverses en termes de fonctionnalité et de performance.

Le concept du découpage par tranches du réseau repose sur trois couches distinctes que sont la couche « ressource », la couche « instanciation de tranche de réseau » et la couche « instanciation de service ».

La première couche « ressource » comprend toutes les ressources physiques et logiques d'un réseau, en termes de puissance de calcul, de mémoire et capacité de transmission, nécessaires à l'exécution de l'instanciation d'une ou plusieurs tranches de réseau.

A ce titre, les ressources dites « physiques » sont tous les équipements ayant des capacités de calcul, des moyens de mémorisation et des capacités de transmission au sein d'un réseau. Les ressources dites « logiques » peuvent alors consister en une partie d'une ressource physique, ou au contraire en un rassemblement de plusieurs ressources physiques dédiées à une fonction de réseau ou partagées entre plusieurs fonctions de réseau.

La deuxième couche « instanciation de tranche de réseau » se compose des différentes instanciations de tranches du réseau servant à offrir des services, chaque instanciation pouvant être décomposées en une ou plusieurs fonctions de réseau exécutées par des ressources physiques et/ou logiques de la couche « ressource ».

Enfin, la troisième couche « instanciation de service » représente des services (à l'utilisateur ou à une entreprise) qui peuvent être supportés par la deuxième couche, c'est-à-dire en faisant appel à une ou plusieurs instanciations de tranche de réseau pour fournir les caractéristiques réseaux nécessaires à une instanciation de service requise.

Ainsi, une instanciation de couche de réseau peut être définie comme étant un ensemble de fonctions de réseau et de ressources permettant d'exécuter ces fonctions de réseau, s'apparentant à un réseau logique complet permettant d'obtenir certaines caractéristiques requises par une instanciation de service.

Il est ainsi prévu qu'une multitude d'instanciations de tranche de réseau puissent simultanément être exécutées au sein d'un même réseau physique de télécommunications, afin d'offrir différents services au travers de ce réseau.

Cependant, à ce stade, l'accès de l'utilisateur, via son terminal, à l'une ou l'autre de ces instanciations n'a pas été envisagé. En particulier, un terminal mobile conventionnel dans un réseau « 4G/LTE » est toujours connecté à une unique entité MME (« Mobility Management Entity ») et une unique passerelle S-GW bien spécifiques, situés dans le cœur du réseau de télécommunications mobile en l'occurrence, pour pouvoir obtenir différents services et accéder à des réseaux externes.

Un terminal mobile conventionnel n'a donc pas la faculté de pouvoir se connecter à différentes instanciations de tranches de réseau telles qu'envisageables dans les futurs réseaux, lesquelles reposent potentiellement sur des ressources physiques et logiques diverses et variées.

L'article « OpenFlow as an Architecture for e-Node B Virtualization » de Daniel Philip Venmani et al. ("Lecture Notes of the Institute for Computer Sciences, Social Informatics and Telecommunications Engineering, 1 janvier 2012, Springer) décrit pour sa part une architecture de réseau 4G-LTE dans laquelle les stations de base e-Node B seraient virtualisées au moyen du protocole OpenFlow, afin de permettre un partage de réseau entre plusieurs opérateurs de réseau, sans toutefois que le terminal mobile n'intervienne d'une quelconque manière dans la sélection d'une tranche de réseau.

La demande de brevet FR 3 008 843 décrit pour sa part un mécanisme de sélection, par un terminal mobile, d'un réseau d'accès parmi plusieurs réseaux d'accès possibles, en fonction d'une règle de sélection obtenue en provenance d'un dispositif de sélection de réseaux d'accès, sans que soit évoquée la sélection d'une instanciation de tranche de réseau au sein d'un même réseau physique de télécommunications.

La présente invention, laquelle est définie par l'objet des revendications indépendantes, a pour objet de remédier à ces inconvénients.

Elle propose à cet effet un procédé de sélection d'une instanciation de tranche de réseau dans un réseau de communication pour la transmission de données montantes depuis un terminal utilisateur, le procédé comprenant les étapes suivantes :
vérifier, au moyen d'un module de communication du terminal utilisateur, la correspondance entre un paquet montant reçu par ledit module de communication et au moins une règle parmi une pluralité de règles, priorisées les unes par rapport aux autres, désignant une instanciation de tranche de réseau apte à transmettre le paquet montant dans le réseau de communication ; et
lorsque le paquet montant correspond à plusieurs desdites règles désignant une instanciation de tranche de réseau apte à transmettre le paquet, émettre, au moyen du module de communication, le paquet montant vers une entité d'accès au plan utilisateur de l'instanciation de tranche de réseau désignée par la règle la plus prioritaire parmi lesdites règles correspondant au paquet montant.

L'opérateur d'un réseau de communication peut ainsi segmenter son réseau en fonction de différents usages et niveaux de service, par exemple en proposant une tranche de réseau (« network slice » en anglais) très robuste pour les services ayant besoin d'une haute disponibilité (mission critique) et une tranche de réseau peu robuste pour les services pouvant accepter des interruptions de service. Un terminal utilisateur peut alors sélectionner une instanciation spécifique parmi différentes tranches de réseau disponibles en fonction du service qu'il souhaite obtenir au travers de l'envoi de paquets montants, et ainsi bénéficier de conditions réseau spécifiquement adaptées au besoin de ce service, d'une manière flexible et simple.

Selon un mode de réalisation avantageux, lorsqu'aucune règle désignant une instanciation de tranche de réseau ne correspond au paquet montant, le paquet montant est émis vers une entité d'accès au plan utilisateur d'une instanciation de tranche de réseau par défaut.

L'utilisation d'une instanciation de tranche de réseau par défaut permet à l'opérateur du réseau de proposer un accès par défaut au réseau pour le terminal, quand bien même le service qu'il sollicite ne correspond à aucune instanciation spécifique de tranche de réseau à un instant donné. Cette instanciation par défaut peut alors être utilisée par l'opérateur pour fournir un certain nombre d'informations au terminal utilisateur, en particulier des règles de sélection d'instanciations de tranche de réseau adaptées aux services pouvant être requis par ce terminal.

Selon un aspect particulier de ce mode de réalisation avantageux, le procédé comprend en outre une phase préalable d'attachement du terminal utilisateur auprès de l'instanciation de tranche de réseau par défaut, au cours de laquelle le module de communication reçoit, depuis une entité d'accès au plan de contrôle de l'instanciation de tranche de réseau par défaut, un message d'acquittement d'attachement contenant ladite au moins une règle désignant une instanciation de tranche de réseau. Cela permet à l'opérateur du réseau d'assurer le contrôle, au travers de l'établissement d'un accès par défaut au réseau fourni au terminal, de la sélection parmi différentes instanciations de tranche de réseau que peut faire le terminal pour différents types de services.

Selon un autre aspect particulier de ce mode de réalisation avantageux, le module de communication reçoit, depuis l'entité d'accès au plan de contrôle de l'instanciation de tranche de réseau par défaut, un message contenant ladite au moins une règle désignant une instanciation de tranche de réseau, ce qui permet à l'opérateur du réseau de pouvoir effectuer un contrôle en temps réel de la sélection d'instanciation que peut faire le terminal pour différents types de services. Ce message peut ainsi être aussi bien un message de fourniture initiale qu'un message de mise à jour de la règle en question.

Selon un autre aspect particulier de ce mode de réalisation avantageux où la au moins une règle comprend en outre un paramètre de durée de validité, le procédé comprend en outre :
la vérification du paramètre de durée de validité de ladite au moins une règle ; et
lorsque la durée de validité de ladite au moins une règle a expiré, l'émission, vers l'entité d'accès au plan de contrôle de l'instanciation de tranche de réseau par défaut, d'une requête d'obtention dudit message de mise à jour de ladite au moins une règle.

Cela permet une optimisation de la mise à jour des règles de sélection d'instanciation, en ne sollicitant leur mise à jour qu'après l'expiration de l'ensemble de ces règles.

Selon un autre mode de réalisation avantageux, lorsque le paquet montant correspond à une règle désignant une instanciation de tranche de réseau auprès de laquelle le terminal utilisateur n'est pas attaché, le module de communication émet une requête d'attachement vers une entité d'accès au plan de contrôle de l'instanciation de tranche de réseau désignée, le paquet montant étant émis suite à la réception d'un message d'acquittement d'attachement provenant de l'entité d'accès au plan de contrôle.

Selon un autre mode de réalisation avantageux, la au moins une règle contient au moins un paramètre déterminé parmi une adresse de destination des paquets, un protocole de transport, un port source, un port destination, un protocole applicatif, une information de localisation du terminal ou une plage horaire d'application de la règle, la vérification de la correspondance entre le paquet montant et ladite au moins une règle comprenant la vérification de l'adéquation entre un paramètre du paquet montant et le paramètre déterminé. La sélection de l'instanciation peut ainsi être réalisée simplement, en filtrant les paquets montants par rapport à certains de leurs paramètres pour les aiguiller vers une instanciation adaptée au service correspondant.

Selon un autre mode de réalisation avantageux, le procédé comprend en outre une étape préalable de vérification de l'appartenance du paquet montant à un nouveau flux de données,
la vérification de la correspondance entre le paquet montant et au moins une règle étant effectuée lorsque le paquet montant appartient à un nouveau flux de données ; et
lorsque le paquet montant n'appartient pas à un nouveau flux de données, le paquet montant est émis vers une entité d'accès au plan utilisateur de l'instanciation de tranche de réseau utilisée pour au moins un précédent paquet montant du flux de données auquel appartient le paquet montant.

Selon un autre mode de réalisation avantageux, lorsque le terminal est attaché auprès d'une instanciation de tranche de réseau et qu'il n'échange aucun paquet de données utiles avec une entité d'accès au plan utilisateur de ladite instanciation de tranche de réseau pendant un laps de temps déterminé, le module de communication émet une requête de détachement vers une entité d'accès au plan de contrôle de ladite instanciation de tranche de réseau. Cela permet de libérer les ressources réservées lorsque le terminal est attaché à une instanciation inutilisée, en particulier des informations de contexte stockées en mémoire dans le terminal utilisateur et les équipements du réseau.

Selon un aspect particulier de ce mode de réalisation avantageux dans lequel la requête de détachement concerne une instanciation de tranche de réseau par défaut et est émise vers une entité d'accès au plan de contrôle de ladite instanciation de tranche de réseau par défaut, le procédé comprend en outre :
la vérification d'un paramètre de durée de validité contenu dans ladite au moins une règle ; et
lorsque la durée de validité de ladite au moins une règle a expiré, l'émission, vers l'entité d'accès au plan de contrôle de l'instanciation de tranche de réseau par défaut, d'une requête d'attachement auprès de l'instanciation de tranche de réseau par défaut et, suite à la réception d'un message d'acquittement d'attachement, d'une requête de mise à jour de ladite au moins une règle.

Cela permet une mise en jour des règles de sélection des instanciations en fonction d'un service requis par l'utilisateur tout en préservant les ressources aussi bien côté terminal que côté réseau en évitant de rester inutilement attaché à une instanciation par défaut.

La présente invention vise aussi un terminal utilisateur comprenant un module de communication configuré pour :
vérifier la correspondance entre un paquet montant reçu d'un module applicatif du terminal utilisateur et au moins une règle parmi une pluralité de règles, priorisées les unes par rapport aux autres, désignant une instanciation de tranche de réseau apte à transmettre le paquet montant dans un réseau de communication; et
lorsque le paquet montant correspond à plusieurs desdites règles désignant une instanciation de tranche de réseau apte à transmettre le paquet, émettre le paquet montant vers une entité d'accès au plan utilisateur de l'instanciation de tranche de réseau désignée par la règle la plus prioritaire parmi lesdites règles correspondant au paquet montant.

Selon un mode de réalisation avantageux, le module de communication est configuré en outre pour, lorsqu'aucune desdites règles désignant une instanciation de tranche de réseau ne correspond au paquet montant, émettre ledit paquet montant vers une entité d'accès au plan utilisateur d'une instanciation de tranche de réseau par défaut.

La présente invention vise aussi une entité réseau apte à permettre l'accès au plan de contrôle d'une instanciation de tranche de réseau dans un réseau de communication, comprenant un module de communication configuré pour émettre vers un terminal utilisateur un message contenant au moins une pluralité de règles, priorisées les unes par rapport aux autres, désignant une instanciation de tranche de réseau apte à transmettre un paquet montant dans un réseau de communication, de sorte à ce que le terminal utilisateur puisse émettre un paquet montant vers une entité d'accès au plan utilisateur de l'instanciation de tranche de réseau désignée par la règle la plus prioritaire parmi lesdites règles correspondant audit paquet montant.

La présente invention vise aussi un programme d'ordinateur comportant des instructions de code pour la mise en œuvre du procédé de sélection ci-avant lorsque le programme est exécuté par le processeur d'un terminal utilisateur.

Ce programme peut utiliser n'importe quel langage de programmation, et être sous la forme d'un code source, code objet, ou de code intermédiaire entre code source et code objet, tel que dans une forme partiellement compilée, ou dans n'importe quelle autre forme souhaitable.

La présente invention vise aussi un support d'enregistrement sur lequel sont stockées les instructions de code d'un programme d'ordinateur tel que mentionné ci-dessus.

Ce support d'informations peut être n'importe quelle entité ou dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur. D'autre part, ce support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
- la figure 1 illustre les étapes du procédé de sélection selon un mode de réalisation de l'invention ; et
- la figure 2 représente un organigramme illustrant les étapes du procédé de sélection selon l'invention telles qu'exécutées par le module de communication d'un terminal utilisateur.

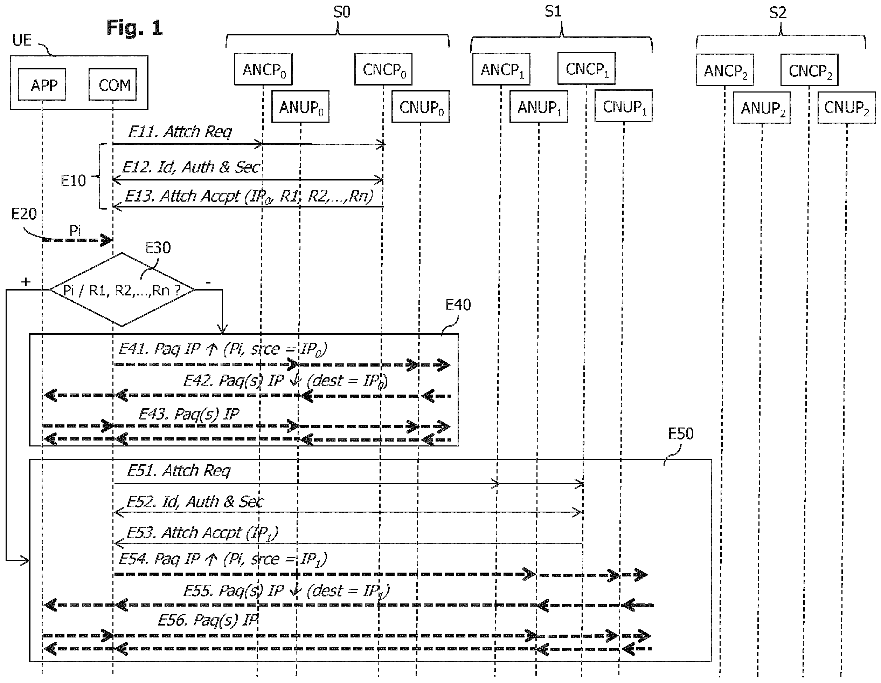

On se réfère tout d'abord à la **figure 1** qui illustre les étapes du procédé de sélection selon un mode de réalisation de l'invention.

Sur cette figure est représenté, d'une part, un terminal utilisateur UE, lequel peut être un terminal mobile, un smartphone, un ordinateur avec une interface radio ou tout autre type d'équipement capable de communiquer avec un réseau d'accès radio ou filaire.

Ce terminal UE comprend d'une part un module applicatif APP (voire plusieurs, un seul module étant illustré sur la figure 1) capable d'exécuter des applications logicielles sur le terminal UE et d'autre part un module de communication COM capable de recevoir des données, sous forme de paquets, depuis le module applicatif APP pour les transmettre vers un réseau mobile de télécommunications et inversement de recevoir des paquets de données depuis un réseau mobile pour les transmettre au module APP.

Le module APP peut consister en un module purement logiciel (telle qu'une application logicielle mobile) ou en un module composé d'un processeur associé à une mémoire dans laquelle sont stockées des instructions de code pouvant correspondre à une application logicielle mobile.

Le module COM comprend notamment un émetteur/récepteur (radio pour un terminal UE mobile), apte à recevoir des paquets descendants de données provenant du réseau et à émettre des paquets montants de données provenant du module APP vers le réseau, ainsi qu'un processeur associé à une mémoire pouvant stocker des instructions de code exécutables par le processeur pour traiter les données reçues du réseau ou du module APP, par exemple pour encapsuler les paquets de données selon un protocole de transmission avant leur émission par l'émetteur/récepteur ou pour sélectionner une instanciation de tranche de réseau d'un réseau de communication pour l'émission de ces paquets, comme il sera vu plus loin.

D'autre part, un réseau de télécommunications mobile est représenté ici selon le principe du découpage par tranches de réseau, avec ici trois instanciations de tranche de réseau S0,S1,S2 à titre purement illustratif et non limitatif.

Chaque instanciation de tranche de réseau comprend un certain nombre d'entités au niveau du plan de contrôle (pour la signalisation) et du plan utilisateur (pour la transmission de données utiles), notamment une première entité dite d'accès au plan utilisateur de l'instanciation, permettant l'échange de données utiles entre l'instanciation et le module de communication COM du terminal UE, et une deuxième entité dite d'accès au plan de contrôle de l'instanciation, permettant l'échange de messages de signalisation entre l'instanciation et le module de communication COM du terminal UE.

Ces deux entités peuvent se présenter sous la forme d'une station de base (telle qu'un eNodeB), pouvant éventuellement être décomposée en une partie plan utilisateur et une partie plan de contrôle selon le type d'instanciation de tranche de réseau utilisée. Ces entités disposent ainsi d'un module de communication (présentant typiquement un émetteur/récepteur radio associé à un processeur et des moyens de mémoire capables de stocker des instructions logicielles exécutables par ce processeur pour traiter les données à transmettre par l'émetteur/récepteur) apte à recevoir des requêtes ou des messages du terminal UE, et configuré pour préparer et envoyer des messages vers le module de communication COM du terminal UE.

Dans le cas particulier du réseau illustré sur la figure 1, chaque instanciation distingue des fonctions de réseau d'accès et de cœur de réseau, pour refléter une architecture semblable à l'architecture existante des réseaux de précédentes générations, de sorte que l'instanciation comprenne, pour la tranche S0 (il en va similairement pour les tranches S1 et S2) :
- une entité d'accès au plan de contrôle du réseau d'accès, dit ANCP₀ (pour « Access Network Control Plane »), destinée à être en lien direct avec le terminal UE pour l'échange de messages de signalisation.
- une entité d'accès au plan utilisateur du réseau d'accès, dit ANUP₀ (pour « Access Network User Plane »), destinée à être en lien direct avec le terminal UE pour l'échange des données utiles.
- une entité d'accès au plan de contrôle du cœur de réseau, dit CNCP₀ (pour « Core Network Control Plane »), pouvant être notamment en charge de gérer la mobilité et la joignabilité des terminaux, la qualité de service, la sécurité, l'établissement des sessions de données, le comptage, l'interaction avec des entités externes afin de contrôler la fourniture des services, etc.
- une entité d'accès au plan utilisateur du cœur de réseau, dit CNUP₀ (pour « Core Network User Plane »), destinée à transporter les données utiles depuis et vers un réseau externe au réseau de communication sous le contrôle de l'entité CNCP₀.

Le procédé peut optionnellement débuter par une étape préalable E10 d'attachement du terminal UE auprès d'une instanciation de tranche de réseau S0, dite instanciation par défaut. Au cours de cette étape E10 :
- le module de communication COM du terminal UE émet (étape E11) une requête d'attachement vers l'entité ANCP₀, lequel retransmet cette requête vers l'entité CNCP₀.
- suite à la réception de cette requête, l'entité CNCP₀ déclenche des échanges (étape E12) de messages avec le module COM du terminal UE afin d'identifier le terminal UE, d'authentifier son utilisateur et de mettre en place des paramètres de sécurité (cryptage, contrôle d'intégrité, etc.) de manière connue en soi.
- Une fois l'identification, l'authentification et la mise en place des paramètres de sécurité validées, l'entité CNCP₀ peut alors retourner (étape E13) un message d'acquittement de l'attachement au module COM du terminal UE, pour confirmer au terminal UE son attachement à l'instanciation S0.

Un tel message d'acquittement peut contenir une adresse ou un identifiant permettant d'adresser le terminal UE à travers l'instanciation S0 depuis un réseau externe au réseau de communication de l'opérateur, et notamment le réseau internet. Il peut s'agir en particulier d'une adresse ou d'un préfixe IP (ici dénotée IP₀) lorsque l'instanciation S0 est basée sur le protocole IP de transmission. On se placera par la suite dans le cas d'adresses IP, sans que l'invention ne soit pour autant limitée au seul protocole IP.

Dans la mesure où l'attachement à l'instanciation S0 constitue le premier attachement à une instanciation du réseau de télécommunications, ce message d'acquittement peut avantageusement contenir en outre un ensemble de règles de filtrage R1,R2,..., Rn indiquant au module COM quelle instanciation utiliser pour quel type de trafic montant.

Ces règles Ri sont typiquement construites par l'entité CNCP₀, en fonction des contraintes de l'opérateur du réseau, avant de pouvoir être transmises vers le terminal UE, par l'intermédiaire de l'entité ANCP₀ dans le plan de signalisation de l'instanciation S0. Alternativement, ces règles Ri peuvent être construites par l'entité ANCP₀ (c'est-à-dire au niveau de la composante réseau d'accès de l'instanciation S0), si cette entité ANCP₀ est habilitée à influer l'aiguillage des paquets montants vers telle ou telle instanciation de tranche de réseau et dispose des informations pour cela.

Ces règles Ri peuvent par exemple être encodées sous la forme d'un fichier XML. Elles sont destinées à être évaluées par rapport aux paquets Pi que le module APP envoie au module COM pour émission vers le réseau, et comportent un ou plusieurs critère(s) tel que l'adresse IP (ou une plage d'adresses IP) de destination des paquets, le protocole de transport, le port source, le port destination ou le protocole applicatif, entre autres.

Ces règles Ri peuvent optionnellement porter sur des paramètres liés à l'environnement du terminal UE tels qu'une zone géographique ou topologique (par exemple exprimée sous forme d'une liste de PLMN IDs ou de TAIs), l'heure dans la journée, etc.

Ces règles Ri comprennent en outre avantageusement un paramètre de durée de validité (ou une date ou heure d'expiration) et désignent chacune une instanciation S0,S1,S2 à utiliser pour un paquet correspondant à la règle.

Ces règles Ri peuvent être générées en fonction du profil de l'utilisateur (par exemple utilisateur grand public, entreprise, sécurité civile, etc.) et ainsi différer d'un utilisateur à l'autre. Pour ce faire, l'entité CNCP₀ peut comprendre, ou interagir avec, une base de données utilisateurs contenant le profil de chaque utilisateur abonné au réseau de communication (similairement à une base de données HSS conventionnelle), ce profil comprenant une information correspondant au type d'utilisateur. L'entité CNCP₀ est alors configurée pour fournir des jeux de règles spécifiques pour chaque type d'utilisateur. Alternativement, les règles R1,R2... peuvent faire partie intégrante du profil d'un utilisateur.

De plus, ces règles Ri peuvent être priorisées les unes par rapport aux autres afin de permettre la sélection d'une seule instanciation lorsque plusieurs instanciations correspondent à un même paquet montant.

A titre d'exemple, un fichier XML décrivant des règles Ri peut ainsi prendre la forme suivante :

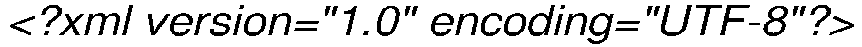

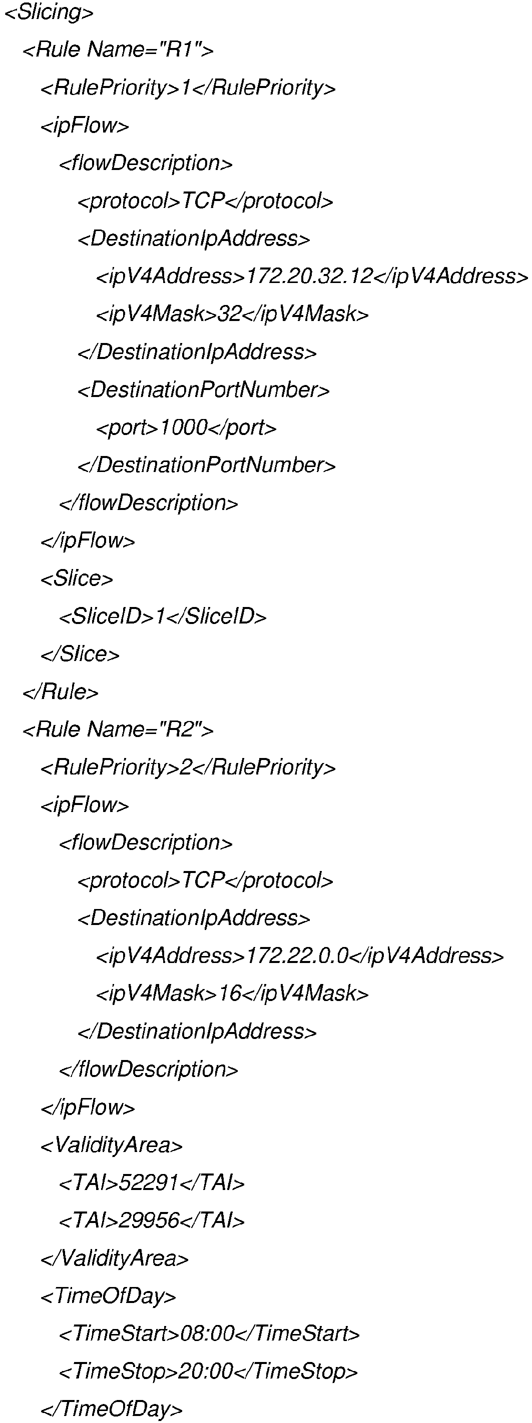

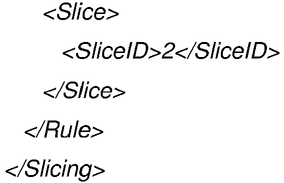

Dans ce fichier XML, deux règles R1 et R2 sont définies, la règle R1 étant prioritaire sur la règle R2, ces deux règles désignant deux instanciations distinctes à utiliser (identiifiées par « SlidelD ») en fonction d'un protocole de transmission (TCP), d'une plage d'adresses de destination, d'un numéro de port de destination pour la règle R1, d'une zone de validité et d'une plage horaire de validité pour la règle R2.

A l'issue de cette étape E10, le terminal UE est rattaché à l'instanciation de tranche de réseau S0 et peut transmettre et recevoir des données pour des services offerts via cette instanciation S0. Il a en outre avantageusement reçu un ensemble de règles R1,R2,..., Rn qu'il a mémorisées.

Le module de communication COM reçoit par la suite (étape E20) des données provenant du module APP, typiquement sous la forme d'un premier paquet Pi, à envoyer vers le réseau mobile.

Le module de communication COM procède alors à la vérification (étape E30) de la correspondance entre le paquet Pi et l'une des règles R1,R2,..., Rn mémorisées par le terminal UE, en d'autres termes si l'un des critères de filtrage défini dans une de ces règles est rempli par le paquet Pi. Dans l'éventualité où plusieurs règles correspondraient au paquet Pi, il est possible de ne prendre en compte que la première de ces règles si tant est que la liste de règles R1,R2,..., Rn est ordonnée, ou de choisir une règle expressément désignée comme étant prioritaire par rapport aux autres.

Si cette vérification s'avère négative, et donc qu'aucune règle Ri ne correspond au paquet Pi à transmettre, l'instanciation S0 par défaut peut être utilisée (étape E40) pour les échanges de paquets entre le terminal UE et le réseau de télécommunications dans le cadre du service initié par le premier paquet Pi.

En particulier, ce premier paquet Pi est envoyé (étape E41) par le module COM, sous forme d'un paquet IP montant avec comme adresse source l'adresse IP₀, vers l'entité ANUP₀ de l'instanciation S0, laquelle retransmet ce paquet vers l'entité CNUP₀ pour que ce dernier le retransmette vers un réseau externe auquel le paquet Pi est destiné.

En réponse à ce premier paquet IP montant, un ou plusieurs paquet(s) IP descendant(s) (i.e. provenant du réseau externe via l'entité CNUP₀) peuvent ensuite être reçus (étape 42) via l'entité ANUP₀, ces paquets étant transmis au terminal UE au moyen de l'adresse IP₀ qui lui a été allouée, utilisée en tant qu'adresse de destination de ces paquets, permettant un routage conventionnel de tels paquets depuis le réseau externe vers l'entité CNUP₀, puis la prise en charge de ces paquets par l'instanciation S0.

Des échanges de paquets montants et descendants similaires peuvent alors lieu ensuite (étape 43) afin de fournir le service souhaité au terminal UE au travers de l'instanciation de tranche de réseau S0.

Si cette vérification s'avère positive, et donc qu'une correspondance a été trouvée entre le paquet Pi et l'une des règles Ri mémorisées, le module COM utilise (étape E50) l'instanciation Si désignée par la règle Ri correspondant au paquet pour transmettre ce paquet.

On se place ici dans le cas où une correspondance a été trouvée avec une règle R1 désignant l'instanciation S1, qui n'est pas l'instanciation S0 à laquelle ce terminal est attaché par défaut.

Le terminal UE s'attache tout d'abord à cette instanciation S1, par le biais de son module COM qui envoie (étape E51) une requête d'attachement à l'entité ANCP₁ de cette instanciation S1, au moyen de paramètres d'accès radio (par exemple fournis dans la règle R1, cela peut aussi être des paramètres fournis par le terminal UE lui-même lorsque le réseau d'accès est commun à plusieurs instanciations de tranche de réseau au niveau du cœur de réseau). La réception de cette requête d'attachement déclenche une phase d'identification, d'authentification et de mise en place de paramètres de sécurité (étape E52) au moyen d'échanges de messages entre le module COM et l'entité CNCP₁ de cette instanciation S1 et, en cas de validation des procédures, l'envoi d'un message d'acquittement d'attachement de l'entité CNCP₁ au module COM (étape E53), similairement aux étapes E11,E12 et E13 décrites précédemment.

A ce stade, le terminal UE est attaché à l'instanciation de tranche de réseau S1, laquelle lui a alloué une adresse spécifique à l'utilisation de cette instanciation S1 (ici l'adresse IP1).

Le module COM du terminal UE peut alors utiliser cette instanciation S1 pour échanger des paquets avec le réseau, en émettant (étape E54) le premier paquet Pi sous forme d'un paquet IP montant avec comme adresse source l'adresse IP₁, vers l'entité ANUP₁ de l'instanciation S1, en recevant (étape E55) en retour un ou plusieurs paquet(s) IP descendant(s) (i.e. provenant du réseau externe via l'entité CNUP₁) utilisant l'adresse IP₁ comme adresse de destination, de tels échanges de paquets montants et descendants pouvant se poursuivre ainsi (étape E56), similairement aux étapes E41, E42 et E43 décrites précédemment, pour fournir le service souhaité au terminal UE via l'instanciation S1.

On voit ainsi que le module COM peut rester attaché simultanément à plusieurs instanciations S0,S1,..., ce qui peut être le cas lorsqu'il a plusieurs flux de données à échanger avec le réseau pour plusieurs applications exécutées par le(s) module(s) APP qui correspondent à plusieurs règles Ri.

Le module COM peut avantageusement déclencher le détachement du terminal UE auprès d'une des instanciations auxquelles il est attaché, typiquement lorsqu'il n'échange aucun paquet de données utiles avec le plan utilisateur de cette instanciation (c'est-à-dire qu'il ne reçoit du module APP aucun paquet montant à envoyer vers cette instanciation et qu'il ne reçoit aucun paquet descendant destiné au module APP depuis cette instanciation) pendant un laps de temps déterminé (par exemple de l'ordre de 10 mn). Dans ce cas, le module COM envoie une requête de détachement à l'entité ANCPᵢ de l'instanciation Si concernée, laquelle retransmet cette requête vers l'entité CNCPᵢ afin que cette dernière procède, de manière connue en soi, au détachement du terminal UE, et retourne au module COM un message d'acquittement de détachement à l'issue de cette procédure. Le terminal UE ne reste ainsi attaché qu'aux instanciations Si du réseau qu'il utilise réellement.

Selon un mode de réalisation, une fois attaché à l'instanciation S0 par défaut, le terminal UE reste attaché à cette instanciation S0, quand bien même elle serait peu ou pas utilisée pour la transmission de paquets de données utiles, afin de permettre l'envoi à tout moment de messages de signalisation de l'entité CNCP₀ au module COM, et notamment d'un message de mise à jour des règles Ri de correspondance, contenant de nouvelles règles Ri à mémoriser dans le terminal UE ou des instructions de modification des règles Ri déjà mémorisées précédemment, voire de suppression de certaines règles Ri devenues obsolètes.

Selon un autre mode de réalisation, quand bien même le terminal UE serait attaché à une instanciation S0 par défaut, il peut tout de même se détacher de cette instanciation S0 (par exemple au moyen de la procédure de détachement décrite précédemment, déclenchée par le module COM en l'absence de réception de paquet de données utiles provenant ou à destination de cette instanciation S0 pendant un laps de temps déterminé). Dans ce dernier cas, à l'issue d'un délai d'expiration de l'ensemble des règles Ri, le module COM peut avantageusement requérir à nouveau le rattachement à l'instanciation S0, selon la procédure de l'étape E10, afin d'obtenir des règles Ri mises à jour.

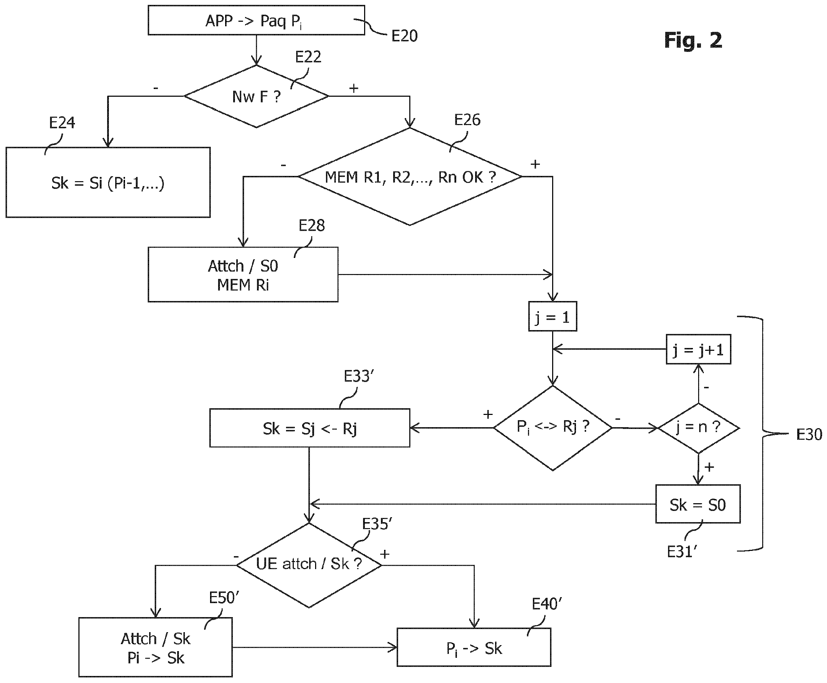

On se réfère à présent à la **figure 2** qui représente un organigramme illustrant les étapes du procédé de sélection selon l'invention telles qu'exécutées par le module de communication d'un terminal utilisateur.

Dans un premier temps, le module COM reçoit un paquet Pi de données du module APP (étape E20 déjà discutée précédemment).

Suite à la réception de ce paquet, le module COM peut procéder à la vérification de l'appartenance de ce paquet Pi à un nouveau flux (étape E22). Cette vérification peut être réalisée par la consultation par le module COM d'une table mémorisée de flux actifs, mémorisant pour chaque flux actif des paramètres tels que les adresses et numéros de port sources et destination utilisés, ainsi que protocole utilisé, afin de comparer ces paramètres mémorisés avec les paramètres correspondants du paquet Pi.

Si cette vérification n'est pas concluante, et donc que le paquet Pi n'est pas le premier paquet d'un nouveau flux de données, l'instanciation Sk à utiliser pour émettre ce paquet Pi est définie comme étant l'instanciation Si, déjà utilisée pour transmettre les paquets Pi-1 précédents du même flux, laquelle est alors à nouveau utilisée (étape E24) pour émettre ce paquet Pi (i.e. en envoyant ce paquet Pi vers l'entité ANUPᵢ de cette instanciation Si).

Si cette vérification est concluante, et donc que le paquet Pi est bien un premier paquet d'un nouveau flux de données, le module COM peut alors avantageusement vérifier (étape E26) si le terminal UE a mémorisé des règles Ri de correspondances valides, c'est-à-dire qui ne sont pas encore expirées. Dans le cas où l'expiration d'une règle Ri entraîne automatiquement son effacement de la mémoire où elle est stockée, cette vérification consiste simplement à vérifier la présence, ou non, d'une règle Ri en mémoire du terminal UE.

Si le terminal UE n'a pas de règle Ri de correspondance valide en mémoire, par exemple parce qu'il n'a pas été attaché au préalable à une instanciation S0 par défaut, le module COM peut déclencher l'attachement du terminal UE à l'instanciation S0 par défaut (par exemple au moyen d'une méthode conventionnelle de recherche de réseau), similairement à l'étape E10 précédemment décrite, afin d'obtenir de l'entité CNCP₀ des règles Ri de correspondance à jour (étape E28).

Si le terminal UE a des règles Ri de correspondance valides en mémoire, ou bien après les avoir obtenues comme indiqué précédemment, le module COM peut alors procéder à la vérification (étape E30) d'une correspondance entre le paquet Pi et l'une de ces règles de correspondance. Pour ce faire, une méthode itérative peut être employée afin de vérifier la correspondance entre le paquet Pi et la succession de règles R1,R2,...,Rn mémorisées jusqu'à trouver une éventuelle correspondance.

Si aucune correspondance n'est trouvée par le module COM, l'instanciation Sk à utiliser pour envoyer le paquet Pi est définie comme étant l'instanciation par défaut S0 (étape E31'). Si une correspondance est trouvée avec une règle Rj par le module COM, l'instanciation Sk à utiliser pour envoyer le paquet Pi est définie comme étant l'instanciation Sj désignée par cette règle Rj (étape E33').

A ce stade, le module COM peut vérifier (étape E35') si le terminal UE est déjà attaché à l'instanciation Sk désignée pour l'envoi du paquet Pi, en particulier si cette instanciation a été désignée par une règle Rk correspondant au paquet Pi (Cela peut être le cas aussi s'il n'a pas été procédé au préalable à l'attachement du terminal UE à une instanciation S0 par défaut).

Si tel est le cas, et donc que le terminal UE a déjà obtenu une adresse IPk auprès de cette instanciation Sk, le paquet Pi peut être directement envoyé (étape E40') vers l'entité ANUPₖ de cette instanciation Sk, similairement à l'étape E41 décrite précédemment.

Si tel n'est pas le cas, le module COM déclenche l'attachement du terminal UE auprès de cette instanciation Sk avant d'envoyer le paquet Pi via cette instanciation Sk (étape E50'), similairement à l'étape E50 décrite précédemment.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, le protocole IP a été utilisé dans les modes de réalisation décrit précédemment, mais tout autre protocole de routage réseau peut être employé.

De plus, bien que la figure 1 illustre un exemple d'application du découpage par tranches de réseau appliqué à un réseau constitué d'un réseau d'accès (radio ou filaire) et d'un cœur de réseau, l'invention est applicable au cas où le découpage par tranches de réseau serait appliqué au seul cœur de réseau, un seul et unique réseau d'accès étant utilisé et commun pour toutes les instanciations de tranches de réseau cœur. Dans ce dernier cas, les entités ANCP₀, ANCP₁,... ne forment qu'une seule entité ANCP de ce réseau d'accès commun, les entités ANUP₀, ANUP₁,... ne forment qu'une seule entité ANUP de ce réseau d'accès commun. Le module COM indique alors l'instanciation sélectionnée au moyen des règles R1,R2... de correspondance dans les messages de signalisation qu'il envoie à l'entité ANCP ainsi que dans les paquets de données utiles qu'il envoie à l'entité ANUP, ce qui permet au réseau d'accès commun d'aiguiller ces messages de signalisation vers la bonne instanciation de tranche de réseau cœur.

De plus, bien que des instanciations de tranche de réseau avec plan utilisateur et plan de contrôle séparés au niveau du réseau d'accès aient été décrites précédemment, l'invention s'applique aussi à des instanciations de tranche de réseau dans lesquelles ces deux plans sont fusionnés au niveau du réseau d'accès, auquel cas les entités ANCP₀ et ANUP₀ peuvent ne former qu'une seule et même entité, pouvant typiquement être implémenté sous la forme d'une station de base ou d'un eNodeB.

En ce qui concerne les instanciations de tranche de réseau comportant une composante cœur de réseau distincte, l'entité CNCP₀ en charge du plan de contrôle de ce cœur de réseau peut être implémentée au moyen d'un premier équipement réseau disposant de fonctionnalités identiques ou similaires à celles d'une entité de gestion de mobilité (MME en anglais) ou de contrôle des règles de politique et de facturation (PCRF en anglais) selon la norme LTE (4G), voire de ces deux entités combinées, pendant que l'entité CNUP₀ en charge du plan utilisateur de ce cœur de réseau peut être implémentée au moyen d'un deuxième équipement réseau disposant de fonctionnalités identiques ou similaires à celles d'une passerelle S-GW selon cette même norme LTE (4G).

Par ailleurs, l'envoi de règles Ri de correspondance a été précédemment décrit comme pouvant être effectué lors de l'attachement du terminal UE à une instanciation de tranche de réseau par défaut S0 ou sur requête émanant du terminal UE suite à la vérification de l'expiration des règles mémorisées, cette vérification pouvant être déclenchée par la réception d'un paquet montant depuis le module APP. L'envoi de ces règles peut aussi être fait spontanément par l'entité CNCP₀ de cette instanciation par défaut S0, dès lors que le terminal UE est effectivement attaché à cette instanciation par défaut S0, par exemple suite à une mise à jour de ces règles dans le réseau.

En outre, bien que la figure 1 n'illustre qu'une seule entité ANCP₀, l'invention s'applique également à une pluralité d'entités ANCP_{0,1}, ANCP_{0,2}... formant ensemble un même plan de contrôle d'un réseau d'accès pour une unique instanciation de tranche de réseau S0. Il en va de même pour les autres entités ANCPᵢ, CNCPᵢ, ANUPᵢ et CNUPᵢ illustrées sur la figure 1.

## Revendications

1. Procédé de sélection d'une instanciation de tranche de réseau (S0,S1,S2) dans un réseau de communication pour la transmission de données montantes depuis un terminal utilisateur (UE), le procédé comprenant les étapes suivantes:
vérifier (E30), au moyen d'un module de communication (COM) du terminal utilisateur, la correspondance entre un paquet montant reçu par ledit module de communication (COM) et au moins une règle parmi une pluralité de règles (R1,R2), priorisées les unes par rapport aux autres, désignant une instanciation de tranche de réseau apte à transmettre le paquet montant dans le réseau de communication ; et
lorsque le paquet montant correspond à plusieurs desdites règles désignant une instanciation de tranche de réseau apte à transmettre le paquet, émettre (E54), au moyen du module de communication (COM), le paquet montant vers une entité d'accès au plan utilisateur (ANUP₁) de l'instanciation de tranche de réseau désignée par la règle la plus prioritaire parmi lesdites règles correspondant au paquet montant.

2. Procédé selon la revendication 1, dans lequel lorsqu'aucune desdites règles désignant une instanciation de tranche de réseau ne correspond au paquet montant, le paquet montant est émis (E41) vers une entité d'accès au plan utilisateur (ANUP₀) d'une instanciation de tranche de réseau par défaut (S0).

3. Procédé selon la revendication 2, comprenant en outre une phase préalable d'attachement (E10) du terminal utilisateur auprès de l'instanciation de tranche de réseau par défaut (S0), au cours de laquelle le module de communication reçoit (E13), depuis une entité d'accès au plan de contrôle (CNCP₀) de l'instanciation de tranche de réseau par défaut, un message d'acquittement d'attachement contenant ladite au moins une règle désignant une instanciation de tranche de réseau.

4. Procédé selon la revendication 2 dans lequel le module de communication reçoit en outre, depuis l'entité d'accès au plan de contrôle (CNCP₀) de l'instanciation de tranche de réseau par défaut, un message contenant ladite au moins une règle désignant une instanciation de tranche de réseau.

5. Procédé selon l'une des revendications 2 à 4, dans lequel ladite au moins une règle (R1,R2) comprend en outre un paramètre de durée de validité, le procédé comprenant en outre :
la vérification du paramètre de durée de validité de ladite au moins une règle (R1,R2) ; et
lorsque la durée de validité de ladite au moins une règle a expiré, l'émission, vers l'entité d'accès au plan de contrôle (ANCP₀) de l'instanciation de tranche de réseau par défaut, d'une requête d'obtention dudit message de mise à jour de ladite au moins une règle (R1,R2).

6. Procédé selon l'une des revendications 1 à 5, dans lequel, lorsque le paquet montant correspond à une règle désignant une instanciation de tranche de réseau auprès de laquelle le terminal utilisateur n'est pas attaché, le module de communication émet (E51) une requête d'attachement vers une entité d'accès au plan de contrôle (ANCP₁) de l'instanciation de tranche de réseau désignée, le paquet montant étant émis suite à la réception (E53) d'un message d'acquittement d'attachement provenant de l'entité d'accès au plan de contrôle (ANCP₁).

7. Procédé selon l'une des revendications 1 à 6, dans lequel ladite au moins une règle contient au moins un paramètre déterminé parmi une adresse de destination des paquets, un protocole de transport, un port source, un port destination, un protocole applicatif, une information de localisation du terminal ou une plage horaire d'application de la règle, la vérification de la correspondance entre le paquet montant et ladite au moins une règle comprenant la vérification de l'adéquation entre un paramètre du paquet montant et le paramètre déterminé.

8. Procédé selon l'une des revendications 1 à 7, comprenant en outre une étape préalable de vérification (E22) de l'appartenance du paquet montant à un nouveau flux de données,
la vérification (E30) de la correspondance entre le paquet montant et au moins une règle étant effectuée lorsque le paquet montant appartient à un nouveau flux de données ; et
lorsque le paquet montant n'appartient pas à un nouveau flux de données, le paquet montant est émis (E24) vers une entité d'accès au plan utilisateur de l'instanciation de tranche de réseau utilisée pour au moins un précédent paquet montant du flux de données auquel appartient le paquet montant.

9. Procédé selon l'une des revendications 1 à 8, dans lequel, lorsque le terminal (UE) est attaché auprès d'une instanciation de tranche de réseau et qu'il n'échange aucun paquet de données utiles avec une entité d'accès au plan utilisateur de ladite instanciation de tranche de réseau pendant un laps de temps déterminé, le module de communication (COM) émet une requête de détachement vers une entité d'accès au plan de contrôle de ladite instanciation de tranche de réseau.

10. Procédé selon la revendication 9, dans lequel la requête de détachement concerne une instanciation de tranche de réseau par défaut (S0) et est émise vers une entité d'accès (ANCP₀) au plan de contrôle de ladite instanciation de tranche de réseau par défaut, le procédé comprenant en outre :
la vérification d'un paramètre de durée de validité contenu dans ladite au moins une règle (R1,R2) ; et
lorsque la durée de validité de ladite au moins une règle a expiré, l'émission, vers l'entité d'accès au plan de contrôle (ANCP₀) de l'instanciation de tranche de réseau par défaut, d'une requête d'attachement auprès de l'instanciation de tranche de réseau par défaut et, suite à la réception d'un message d'acquittement d'attachement, d'une requête de mise à jour de ladite au moins une règle (R1,R2).

11. Terminal utilisateur (UE) comprenant un module de communication (COM), ledit module de communication (COM) étant configuré pour :
vérifier (E30) la correspondance entre un paquet montant (Pi) reçu d'un module applicatif (APP) du terminal utilisateur et au moins une règle parmi une pluralité de règles (R1,R2), priorisées les unes par rapport aux autres, désignant une instanciation de tranche de réseau apte à transmettre le paquet montant dans un réseau de communication; et
lorsque le paquet montant correspond à plusieurs desdites règles désignant une instanciation de tranche de réseau apte à transmettre le paquet, émettre (E53) le paquet montant vers une entité d'accès au plan utilisateur (ANUP₁) de l'instanciation de tranche de réseau désignée par la règle la plus prioritaire parmi lesdites règles correspondant au paquet montant.

12. Terminal utilisateur (UE) selon la revendication 11, ledit module de communication (COM) étant configuré en outre pour, lorsqu'aucune desdites règles désignant une instanciation de tranche de réseau ne correspond au paquet montant, émettre (E41) ledit paquet montant vers une entité d'accès au plan utilisateur (ANUP₀) d'une instanciation de tranche de réseau par défaut (S0).

13. Entité réseau (ANCP₀, CNCP₀) apte à permettre l'accès au plan de contrôle d'une instanciation de tranche de réseau dans un réseau de communication, comprenant un module de communication configuré pour émettre vers un terminal utilisateur (UE) un message contenant au moins une pluralité de règles (R1,R2), priorisées les unes par rapport aux autres, désignant une instanciation de tranche de réseau apte à transmettre un paquet montant dans un réseau de communication, de sorte à ce que le terminal utilisateur puisse émettre (E53) un paquet montant vers une entité d'accès au plan utilisateur (ANUP₁) de l'instanciation de tranche de réseau désignée par la règle la plus prioritaire parmi lesdites règles correspondant audit paquet montant.

14. Programme d'ordinateur comportant des instructions de code pour la mise en œuvre du procédé de sélection selon l'une des revendications 1 à 10 lorsque le programme est exécuté par le processeur d'un terminal utilisateur (UE).

15. Support d'enregistrement sur lequel sont stockées les instructions de code d'un programme d'ordinateur selon la revendication 14.

## Patentansprüche

1. Verfahren zum Auswählen einer Netzwerk-Slice-Instanziierung (S0, S1, S2) in einem Kommunikationsnetzwerk zur Übertragung von Uplink-Daten von einem Benutzerendgerät (UE) aus, wobei das Verfahren die folgenden Schritte umfasst:
Überprüfen (E30), mittels eines Kommunikationsmoduls (COM) des Benutzerendgeräts, der Entsprechung zwischen einem von dem Kommunikationsmodul (COM) empfangenen Uplink-Paket und mindestens einer Regel aus einer Vielzahl von zueinander priorisierten Regeln (R1, R2), die eine Netzwerk-Slice-Instanziierung benennen, die geeignet ist, das Uplink-Paket in dem Kommunikationsnetzwerk zu übertragen; und
wenn das Uplink-Paket mehreren der Regeln entspricht, die eine Netzwerk-Slice-Instanziierung benennen, die geeignet ist, das Paket zu übertragen, Senden (E54), mittels des Kommunikationsmoduls (COM), des Uplink-Pakets an eine Zugangsentität zur Benutzerebene (ANUP₁) der Netzwerk-Slice-Instanziierung, die durch die Regel mit der höchsten Priorität unter den Regeln, die dem Uplink-Paket entsprechen, benannt wird.

2. Verfahren nach Anspruch 1, wobei, wenn keine der eine Netzwerk-Slice-Instanziierung benennenden Regeln dem Uplink-Paket entspricht, das Uplink-Paket an eine Zugangsentität zur Benutzerebene (ANUP₀) einer Standard-Netzwerk-Slice-Instanziierung (S0) gesendet wird (E41).

3. Verfahren nach Anspruch 2, umfassend ferner eine vorhergehende Phase der Anbindung (E10) des Benutzerendgeräts an die Standard-Netzwerk-Slice-Instanziierung (S0), während der das Kommunikationsmodul von einer Zugangsentität zur Steuerebene (CNCP₀) der Standard-Netzwerk-Slice-Instanziierung aus eine Anbindungsbestätigungsnachricht empfängt (E13), welche die mindestens eine Regel enthält, die eine Netzwerk-Slice-Instanziierung benennt.

4. Verfahren nach Anspruch 2, wobei das Kommunikationsmodul ferner, von der Zugangsentität zur Steuerebene (CNCP₀) der Standard-Netzwerk-Slice-Instanziierung aus, eine Nachricht empfängt, welche die mindestens eine Regel enthält, die eine Netzwerk-Slice-Instanziierung benennt.

5. Verfahren nach einem der Ansprüche 2 bis 4, wobei die mindestens eine Regel (R1, R2) ferner einen Gültigkeitsdauerparameter umfasst, wobei das Verfahren ferner umfasst:
das Überprüfen des Gültigkeitsdauerparameters der mindestens einen Regel (R1, R2); und
wenn die Gültigkeitsdauer der mindestens einen Regel abgelaufen ist, das Senden, an die Zugangsentität zur Steuerebene (ANCP₀) der Standard-Netzwerk-Slice-Instanziierung, einer Anforderung zum Erhalten der Aktualisierungsnachricht für die mindestens eine Regel (R1, R2).

6. Verfahren nach einem der Ansprüche 1 bis 5, wobei, wenn das Uplink-Paket einer Regel entspricht, die eine Netzwerk-Slice-Instanziierung benennt, an die das Benutzerendgerät nicht angebunden ist, das Kommunikationsmodul eine Anbindungsanforderung an eine Zugangsentität zur Steuerebene (ANCP₁) der benannten Netzwerk-Slice-Instanziierung sendet (E51), wobei das Uplink-Paket nach dem Empfangen (E53) einer von der Zugangsentität zur Steuerebene (ANCP₁) kommenden Anbindungsbestätigungsnachricht gesendet wird.

7. Verfahren nach einem der Ansprüche 1 bis 6, wobei die mindestens eine Regel mindestens einen bestimmten Parameter unter einer Zieladresse der Pakete, einem Transportprotokoll, einem Quellport, einem Zielport, einem Anwendungsprotokoll, einer Standortinformation des Endgeräts oder einem Anwendungszeitbereich der Regel enthält, wobei das Überprüfen der Entsprechung zwischen dem Uplink-Paket und der mindestens einen Regel das Überprüfen der Entsprechung zwischen einem Parameter des Uplink-Pakets und dem bestimmten Parameter umfasst.

8. Verfahren nach einem der Ansprüche 1 bis 7, umfassend ferner einen vorhergehenden Schritt des Überprüfens (E22) der Zugehörigkeit des Uplink-Pakets zu einem neuen Datenstrom,
wobei das Überprüfen (E30) der Entsprechung zwischen dem Uplink-Paket und mindestens einer Regel durchgeführt wird, wenn das Uplink-Paket zu einem neuen Datenstrom gehört; und
wenn das Uplink-Paket nicht zu einem neuen Datenstrom gehört, das Uplink-Paket an eine Zugangsentität zur Benutzerebene der Netzwerk-Slice-Instanziierung gesendet wird (E24), die für mindestens ein vorhergehendes Uplink-Paket des Datenstroms verwendet wurde, zu dem das Uplink-Paket gehört.

9. Verfahren nach einem der Ansprüche 1 bis 8, wobei, wenn das Endgerät (UE) an eine Netzwerk-Slice-Instanziierung angebunden ist und während einer bestimmten Zeitspanne kein Nutzdatenpaket mit einer Zugangsentität zur Benutzerebene der Netzwerk-Slice-Instanziierung austauscht, das Kommunikationsmodul (COM) eine Trennanforderung an eine Zugangsentität zur Steuerebene der Netzwerk-Slice-Instanziierung sendet.

10. Verfahren nach Anspruch 9, wobei die Trennanforderung eine Standard-Netzwerk-Slice-Instanziierung (S0) betrifft und an eine Zugangsentität (ANCP₀) zur Steuerebene der Standard-Netzwerk-Slice-Instanziierung gesendet wird, wobei das Verfahren ferner umfasst:
das Überprüfen eines Gültigkeitsdauerparameters, der in der mindestens einen Regel (R1, R2) enthalten ist; und
wenn die Gültigkeitsdauer der mindestens einen Regel abgelaufen ist, das Senden, an die Zugangsentität zur Steuerebene (ANCP₀) der Standard-Netzwerk-Slice-Instanziierung, einer Anbindungsanforderung an die Standard-Netzwerk-Slice-Instanziierung und, nach dem Empfangen einer Anbindungsbestätigungsnachricht, einer Anforderung zur Aktualisierung der mindestens einen Regel (R1, R2).

11. Benutzerendgerät (UE), das ein Kommunikationsmodul (COM) umfasst, wobei das Kommunikationsmodul (COM) dazu ausgestaltet ist:
die Entsprechung zwischen einem von einem Anwendungsmodul (APP) des Benutzerendgeräts empfangenen Uplink-Paket (Pi) und mindestens einer Regel aus einer Vielzahl von zueinander priorisierten Regeln (R1, R2) zu überprüfen (E30), die eine Netzwerk-Slice-Instanziierung benennen, die geeignet ist, das Uplink-Paket in einem Kommunikationsnetzwerk zu übertragen; und
wenn das Uplink-Paket einer Vielzahl der Regeln entspricht, die eine Netzwerk-Slice-Instanziierung benennen, die geeignet ist, das Paket zu übertragen, Senden (E53) des Uplink-Pakets an eine Zugangsentität zur Benutzerebene (ANUP₁) der Netzwerk-Slice-Instanziierung, die durch die Regel mit der höchsten Priorität unter den Regeln, die dem Uplink-Paket entsprechen, benannt wird.

12. Benutzerendgerät (UE) nach Anspruch 11, wobei das Kommunikationsmodul (COM) ferner ausgestaltet ist, um, wenn keine der eine Netzwerk-Slice-Instanziierung benennenden Regeln dem Uplink-Paket entsprich, das Uplink-Paket an eine Zugangsentität zur Benutzerebene (ANUP₀) einer Standard-Netzwerk-Slice-Instanziierung (S0) zu senden (E41).

13. Netzwerkentität (ANCP₀, CNCP₀), die geeignet ist, den Zugang auf die Steuerebene einer Netzwerk-Slice-Instanziierung in einem Kommunikationsnetzwerk zu ermöglichen, mit einem Kommunikationsmodul, das so ausgestaltet ist, dass es an ein Benutzerendgerät (UE) eine Nachricht sendet, die mindestens eine Vielzahl zueinander priorisierter Regeln (R1, R2) enthält, die eine Netzwerk-Slice-Instanziierung benennen, die geeignet ist, ein Uplink-Paket in einem Kommunikationsnetzwerk zu übertragen, so dass das Benutzerendgerät ein Uplink-Paket an eine Zugangsentität zur Benutzerebene (ANUP₁) der Netzwerk-Slice-Instanziierung senden kann (E53), die durch die Regel mit der höchsten Priorität unter den Regeln, die dem Uplink-Paket entsprechen, benannt wird.

14. Computerprogramm mit Codeanweisungen, die bei der Ausführung des Programms durch den Prozessor eines Benutzerendgeräts (UE) das Verfahren zum Auswählen nach einem der Ansprüche 1 bis 10 durchführen.

15. Speichermedium, auf dem die Codeanweisungen eines Computerprogramms nach Anspruch 14 gespeichert sind.

## Claims

1. Method for selecting a network slice instantiation (S0, S1, S2) in a communication network for uplink data transmission from a user terminal (UE), the method comprising the following steps:
verifying (E30), by way of a communication module (COM) of the user terminal, the correspondence between an uplink packet received by said communication module (COM) and at least one rule from among a plurality of rules (R1, R2) that are prioritized with respect to one another, designating a network slice instantiation capable of transmitting the uplink packet in the communication network; and,
when the uplink packet corresponds to several of said rules designating a network slice instantiation capable of transmitting the packet, transmitting (E54), by way of the communication module (COM), the uplink packet to an access entity for accessing the user plane (ANUP₁) of the network slice instantiation designated by the highest-priority rule from among said rules corresponding to the uplink packet.

2. Method according to Claim 1, wherein, when none of said rules designating a network slice instantiation corresponds to the uplink packet, the uplink packet is transmitted (E41) to an access entity for accessing the user plane (ANUP₀) of a default network slice instantiation (S0).

3. Method according to Claim 2, furthermore comprising a prior phase of attaching (E10) the user terminal to the default network slice instantiation (S0), during which the communication module receives (E13), from an access entity for accessing the control plane (CNCP₀) of the default network slice instantiation, an attachment acknowledgement message containing said at least one rule designating a network slice instantiation.

4. Method according to Claim 2, wherein the communication module furthermore receives, from the access entity for accessing the control plane (CNCP₀) of the default network slice instantiation, a message containing said at least one rule designating a network slice instantiation.

5. Method according to one of Claims 2 to 4, wherein said at least one rule (R1, R2) furthermore comprises a validity period parameter, the method furthermore comprising :
verifying the validity period parameter for said at least one rule (R1, R2); and
when the validity period of said at least one rule has expired, transmitting, to the access entity for accessing the control plane (ANCP₀) of the default network slice instantiation, a request to obtain said message for updating said at least one rule (R1, R2).

6. Method according to one of Claims 1 to 5, wherein, when the uplink packet corresponds to a rule designating a network slice instantiation to which the user terminal is not attached, the communication module transmits (E51) an attachment request to an access entity for accessing the control plane (ANCP₁) of the designated network slice instantiation, the uplink packet being transmitted following the receipt (E53) of an attachment acknowledgement message from the access entity for accessing the control plane (ANCP₁).

7. Method according to one of Claims 1 to 6, wherein said at least one rule contains at least one determined parameter from among a packet destination address, a transport protocol, a source port, a destination port, an application protocol, terminal location information or a time range for application of the rule, the verification of the correspondence between the uplink packet and said at least one rule comprising verifying the matching between a parameter of the uplink packet and the determined parameter.

8. Method according to one of Claims 1 to 7, furthermore comprising a prior step of verifying (E22) that the uplink packet belongs to a new data flow,
the correspondence between the uplink packet and at least one rule being verified (E30) when the uplink packet belongs to a new data flow; and
when the uplink packet does not belong to a new data flow, the uplink packet is transmitted (E24) to an access entity for accessing the user plane of the network slice instantiation used for at least one previous uplink packet of the data flow to which the uplink packet belongs.

9. Method according to one of Claims 1 to 8, wherein, when the terminal (UE) is attached to a network slice instantiation and does not exchange any payload data packet with an access entity for accessing the user plane of said network slice instantiation for a determined period of time, the communication module (COM) transmits a detachment request to an access entity for accessing the control plane of said network slice instantiation.

10. Method according to Claim 9, wherein the detachment request relates to a default network slice instantiation (S0) and is transmitted to an access entity for accessing the control plane (ANCP₀) of said default network slice instantiation, the method furthermore comprising:
verifying a validity period parameter contained in said at least one rule (R1, R2); and
when the validity period of said at least one rule has expired, transmitting, to the access entity for accessing the control plane (ANCP₀) of the default network slice instantiation, an attachment request to attach to the default network slice instantiation and, following receipt of an attachment acknowledgment message, a request to update said at least one rule (R1, R2).

11. User terminal (UE) comprising a communication module (COM), said communication module (COM) being configured to:
verify (E30) the correspondence between an uplink packet (Pi) received from an application module (APP) of the user terminal and at least one rule from among a plurality of rules (R1, R2) that are prioritized with respect to one another, designating a network slice instantiation capable of transmitting the uplink packet in a communication network; and
when the uplink packet corresponds to several of said rules designating a network slice instantiation capable of transmitting the packet, transmit (E53) the uplink packet to an access entity for accessing the user plane (ANUP₁) of the network slice instantiation designated by the highest-priority rule from among said rules corresponding to the uplink packet.

12. User terminal (UE) according to Claim 11, said communication module (COM) furthermore being configured, when none of said rules designating a network slice instantiation corresponds to the uplink packet, to transmit (E41) said uplink packet to an access entity for accessing the user plane (ANUP₀) of a default network slice instantiation (S0).

13. Network entity (ANCP₀, CNCP₀) capable of enabling access to the control plane of a network slice instantiation in a communication network, comprising a communication module configured to transmit, to a user terminal (UE), a message containing at least a plurality of rules (R1, R2) that are prioritized with respect to one another, designating a network slice instantiation capable of transmitting an uplink packet in a communication network, such that the user terminal is able to transmit (E53) an uplink packet to an access entity for accessing the user plane (ANUP₁) of the network slice instantiation designated by the highest-priority rule from among said rules corresponding to said uplink packet.

14. Computer program comprising code instructions for implementing the selection method according to one of Claims 1 to 10 when the program is executed by the processor of a user terminal (UE).

15. Recording medium on which the code instructions of a computer program according to Claim 14 are stored.
